# EUROPÄISCHE PATENTSCHRIFT

(11) **EP 2 892 633 B1**
(45) Veröffentlichungstag und Bekanntmachung des Hinweises auf die Patenterteilung: **27.07.2016**
(21) Anmeldenummer: 13750876.8
(22) Anmeldetag: 19.08.2013
(51) Int. Cl.: B01D 53/14

(54) **VERFAHREN ZUR ABTRENNUNG VON SAUERGASEN AUS EINEM WASSERHALTIGEN FLUIDSTROM**
METHOD FOR SEPARATING ACID GASES FROM AN AQUEOUS FLOW OF FLUID
PROCÉDÉ POUR SÉPARER DES GAZ ACIDES D'UN COURANT DE FLUIDE CONTENANT DE L'EAU

(30) Priorität: 05.09.2012 US 201261696827 P; 05.09.2012 EP 12183132
(43) Veröffentlichungstag der Anmeldung: 15.07.2015
(73) Patentinhaber: BASF SE, 67056 Ludwigshafen am Rhein (DE)
(72) Erfinder: KATZ, Torsten, 67434 Neustadt (DE); BARTLING, Karsten, 27519 Cary (US)
(86) Internationale Anmeldenummer: PCT/EP2013/067217
(87) Internationale Veröffentlichungsnummer: WO 2014/037214

(56) Entgegenhaltungen:
- EP-A1- 2 228 119
- EP-A2- 2 338 583
- WO-A1-2012/070523
- US-A1- 2003 045 756

## Beschreibung

Die vorliegende Erfindung betrifft ein Verfahren zur Abtrennung von Sauergasen aus einem wasserhaltigen Fluidstrom.

Zahlreiche Fluidströme enthalten Sauergase, wie z.B. CO₂, H₂S, SO₂, CS₂, HCN, COS oder Merkaptane. Bei diesen Fluidströmen kann es sich beispielsweise um Gasströme wie Erdgas, Raffineriegas, Synthesegas, Rauchgase oder bei der Kompostierung organischer Substanzen enthaltender Abfallstoffe entstehende Reaktionsgase handeln. Die Entfernung der sauren Gase aus diesen Fluidströmen ist aus verschiedenen Gründen wünschenswert.

Die Entfernung von Kohlendioxid aus Rauchgasen dient insbesondere der Verminderung der Emission von Kohlendioxid, die als Hauptursache für den so genannten Treibhauseffekt angesehen wird.

Synthesegas besteht im Wesentlichen aus Kohlenmonoxid und Wasserstoff. Synthesegas wird im Allgemeinen durch Partialoxidation oder Steamreforming von Kohlenwasserstoffen hergestellt. Das rohe Synthesegas enthält saure Gase wie Kohlendioxid, Schwefelwasserstoff oder Carbonylsulfid, die entfernt werden müssen.

Der Gehalt an sauren Gasen in Erdgas wird durch geeignete Aufbereitungsmaßnahmen unmittelbar an der Erdgasquelle reduziert, denn diese bilden in dem vom Erdgas häufig mitgeführten Wasser Säuren, die korrosiv wirken.

Im industriellen Maßstab werden zur Entfernung von Sauergasen, wie Kohlendioxid, aus Fluidströmen häufig wässrige Lösungen organischer Basen, z. B. Amine wie insbesondere Alkanolamine, als Absorptionsmittel eingesetzt. Beim Lösen von Sauergasen bilden sich dabei aus der Base und den Sauergasbestandteilen ionische Produkte. Das Absorptionsmittel kann durch Erwärmen, Entspannen auf einen niedrigeren Druck oder Strippen regeneriert werden, wobei die ionischen Produkte zu Sauergasen zurück reagieren und/oder die Sauergase mittels Dampf abgestrippt werden. Nach dem Regenerationsprozess kann das Absorptionsmittel wiederverwendet werden.

Die verwendeten Amine weisen allerdings einen nicht zu vernachlässigenden Dampfdruck auf. Daher enthält der von Sauergasen befreite Fluidstrom Spuren von Aminen. Die Kontamination des behandelten Fluidstroms ist aus verschiedenen Gründen unerwünscht. So ist es nachteilig, wenn mit dem behandelten Rauchgas Spuren von Aminen in die Umwelt entweichen. Synthesegas ist das Ausgangsmaterial weiterer katalytischer Umsetzungen. Aminspuren können dabei als Katalysatorgift wirken. Der Gehalt an Aminen in Erdgas oder dem daraus durch Verflüssigung hergestelltem LPG (Liquified Petroleum Gas) kann ebenfalls Beschränkungen unterliegen.

Im Stand der Technik ist vorgeschlagen worden, den behandelten Fluidstrom mit einer wässrigen Flüssigkeit zu waschen, um mitgeführtes Amin zumindest teilweise in die wässrige Flüssigkeit zu überführen.

Die EP 0 798 029 A2 offenbart ein Verfahren, bei dem ein Gas zur Absorption von Kohlendioxid mit einer basischen Aminverbindung behandelt wird und das behandelte Gas dann bei 20 bis 60 °C mit einer wässrigen Phase in Kontakt gebracht wird, um mitgeführtes basisches Amin zumindest teilweise in die wässrige Phase zu überführen. Die wässrige Phase soll vorzugsweise ein Kondensat sein, das aus dem im Regenerationsturm freigesetzten Kohlendioxid auskondensiert wird.

Die EP 0 502 596 A1 lehrt ein Verfahren zur Entfernung von CO₂ aus einem Verbrennungsabgas, wobei man das Verbrennungsabgas in einem ersten Abschnitt mit einem Absorptionsmittel in Kontakt bringt, das eine wässrige Lösung eines Alkanolamins enthält, aus dem Verbrennungsabgas durch Kühlen Wasser auskondensiert und das auskondensierte Wasser in einem zweiten Abschnitt mit dem an Kohlendioxid verarmten Verbrennungsabgas in Kontakt bringt.

EP 1 132 125 A1 offenbart ein Verfahren zur Kontrolle der Konzentration eines Absorptionsmittels in einer Anlage zur Abtrennung von CO₂, wobei die Temperatur des zirkulierenden Wassers in einer Waschzone in Abhängigkeit von Flüssigkeitsstand im Sumpf des Absorptionsturms gesteuert wird.

EP 1 334 759 A1 lehrt ein Verfahren und eine Vorrichtung zur Rückgewinnung von Amin, wobei Amin, das in einem von CO₂ befreiten Gasstrom enthalten ist, durch mehrere aufeinanderfolgende Waschschritte aus dem Gasstrom entfernt wird.

Aus der US 2008/0159937 geht ein Verfahren zum Entfernen von Kohlendioxid aus einem Gasstrom hervor, bei dem der an Kohlendioxid verarmte Gasstrom in einem Packungsabschnitt der Absorptionskolonne mit Wasser gewaschen wird. Das Wasser kann Kondensat vom Kopf der Regenerationskolonne sein oder Frischwasser zum Ausgleich von Verlustmengen.

In Form von Wasserdampf, der über den behandelten Fluidstrom und die freigesetzten Sauergase abgeführt wird, oder aufgrund anderer physikalischer Verluste verliert eine Sauergasentfernungsanlage laufend Wasser. Um die Verluste auszugleichen und die Wasserbilanz der Anlage zu wahren, ist es daher in der Regel erforderlich, dem Absorptionsmittelkreislauf periodisch Frischwasser zum Ausgleich von Verlustmengen (Make up Water) zuzufügen. Das Frischwasser zum Ausgleich von Verlustmengen sollte keine gelösten Stoffe enthalten und ist z.B. entmineralisiertes Wasser oder Dampfkondensat.

Anderseits kann unter bestimmten Bedingungen in die Sauergasentfernungsanlage mehr Wasser eingetragen werden, als über den behandelten Fluidstrom und die freigesetzten Sauergase abgeführt wird. Dies ist insbesondere dann der Fall, wenn (i) der zu behandelnde Fluidstrom einen hohen Wassergehalt aufweist oder wasserdampfgesättigt ist, (ii) der behandelte Fluidstrom in der Waschzone oder stromabwärts zur Waschzone stark gekühlt wird, um eine effiziente Aminrückhaltung zu gewährleisten, und/oder (iii) der zu behandelnde Fluidstrom einen relativ niedrigen Anteil an Sauergasen enthält und der Volumenstrom der im Regenerator freigesetzten Sauergase daher klein ist.

In diesen Fällen ist es erforderlich, der Sauergasentfernungsanlage Wasser zu entziehen, um eine unkontrollierte Verdünnung des Absorptionsmittels durch einkondensiertes Wasser zu verhindern.

Die EP 2 228 119 A1 lehrt ein Verfahren zur Entfernung von Sauergasen aus einem Gas, bei dem man einen Teil des in den erhaltenen Sauergasen enthaltenen Wassers entfernt. Dies kann dadurch erfolgen, dass man einen Teil des Regeneratorkopfkondensats entfernt und nicht als Rücklauf in den Regenerator leitet.

Die Kondensatströme einer Sauergasentfernungsanlage enthalten mehr oder minder große Mengen Amine. Beim Ausleiten einer Teilmenge eines Kondensatstroms werden daher der Anlage laufend geringe Mengen Amine entzogen. Dies bedingt ökonomische und ökologische Probleme. Einerseits muss das Abwasser zur sicheren Entsorgung aufwändig behandelt werden. Andererseits müssen die Aminverluste laufend oder periodisch ersetzt werden. Zwar bestünde die Möglichkeit, enthaltene Amine aus dem ausgeleiteten Kondensat, z. B. destillativ, zurückzugewinnen. Derartige Methoden sind aufgrund ihres hohen Energiebedarfs im Allgemeinen aber wirtschaftlich nicht tragfähig.

Die US 2003/0045756 offenbart ein Verfahren zur Entfernung von Kohlendioxid aus einem Gasstrom mit Wasserwäsche zur Entaminierung.

Der vorliegenden Erfindung liegt die Aufgabe zugrunde, ein Verfahre zur Entfernung von Sauergasen aus wasserhaltigen Fluidströmen, insbesondere zur Entfernung von Sauergasen aus Erdgas, anzugeben, das im Wesentlichen ohne zusätzlichen Energiebedarf eine effiziente Rückhaltung von Aminen aus den behandelten Fluidströmen unter Wahrung der Wasserbilanz der Sauergasentfernungsanlage erlaubt.

Die Aufgabe wird gelöst durch ein Verfahren zur Abtrennung von Sauergasen aus einem wasserhaltigen Fluidstrom, wobei man
a) den wasserhaltigen Fluidstrom in einer Absorptionszone mit einem Absorptionsmittel, das mindestens ein Amin enthält, in Kontakt bringt, wobei man einen entsäuerten Fluidstrom und ein mit Sauergasen beladenes Absorptionsmittel erhält,
b) den entsäuerten Fluidstrom in einer Waschzone mit einer wässrigen Waschflüssigkeit in Kontakt bringt, durch die man die Waschflüssigkeit im einfachen Durchgang ohne Umgangen führt, um mitgeführtes Amin zumindest teilweise in die Waschflüssigkeit zu überführen, wobei man einen entaminierten, entsäuerten Fluidstrom und eine aminbeladene Waschflüssigkeit erhält,
c) den entaminierten, entsäuerten Fluidstrom stromabwärts zur Waschzone kühlt, wobei man aus dem entaminierten, entsäuerten Fluidstrom ein Absorberkopfkondensat auskondensiert,
d) das beladene Absorptionsmittel in eine Desorptionszone leitet, in der die Sauergase zumindest teilweise freigesetzt werden, wobei man ein regeneriertes Absorptionsmittel und desorbierte Sauergase erhält,
e) das regenerierte Absorptionsmittel in die Absorptionszone zurückführt, um einen Absorptionsmittelkreislauf zu bilden,
f) die aminbeladene Waschflüssigkeit und das Absorberkopfkondensat in den Absorptionsmittelkreislauf einführt, und
g) die desorbierten Sauergase durch eine Verstärkungszone, die eine strukturierte Packung, eine regellose Packung und/oder eine Mehrzahl von Böden aufweist, führt und die am Kopf der Verstärkungszone austretenden Sauergase kühlt, um aus den Sauergasen ein Desorberkopfkondensat auszukondensieren, das teilweise in die Verstärkungszone zurückgeführt und teilweise aus dem Verfahren ausgeleitet wird.

### Der wasserhaltige Fluidstrom wird in einer Absorptionszone mit einem

Absorptionsmittel, das mindestens ein Amin enthält, in Kontakt gebracht. Dabei erhält man einen zumindest teilweise entsäuerten Fluidstrom (vorliegend als entsäuerter Fluidstrom bezeichnet) und ein mit Sauergasen beladenes Absorptionsmittel. Die Behandlung des Fluidstroms mit dem Absorptionsmittel erfolgt vorzugsweise im Gegenstrom. Der Fluidstrom wird dabei im Allgemeinen in einen unteren Bereich und das Absorptionsmittel in einen oberen Bereich der Absorptionszone eingespeist. Zur Verbesserung des Kontakts und Schaffung einer großen Stoffaustauschgrenzfläche enthält die Absorptionszone in der Regel Einbauten, z.B. Füllkörper, Packungen und/oder Böden. Die Behandlung des Fluidstroms mit dem Absorptionsmittel erfolgt geeigneterweise in einem Absorptionsturm bzw. Absorptionskolonne, z. B. einer Füllkörper-, Packungs- oder Bodenkolonne. Als Absorptionszone wird die Sektion einer Absorptionskolonne angesehen, in der der Fluidstrom in Stoffaustausch-Kontakt mit dem Absorptionsmittel kommt.

Die Temperatur des in die Absorptionszone eingeführten Absorptionsmittels beträgt im Allgemeinen etwa 20 bis 60°C.

Der entsäuerte Fluidstrom wird dann in einer Waschzone mit einer wässrigen Waschflüssigkeit in Kontakt gebracht, um mitgeführtes Amin zumindest teilweise in die Waschflüssigkeit zu überführen. Dabei erhält man einen entaminierten, entsäuerten Fluidstrom und eine aminbeladene Waschflüssigkeit. Die erfindungsgemäße Wäsche des entsäuerten Fluidstroms mit der wässrigen Waschflüssigkeit gestattet die Entfernung der Hauptmenge des mitgeführten Amins sowie gegebenenfalls mitgeführter Amin-Zersetzungsprodukte.

Als wässrige Waschflüssigkeit eignen sich wässrige Flüssigkeiten, die weitgehend frei von Aminen und Amin-Zersetzungsprodukten sind. Typischerweise enthält die Waschflüssigkeit weniger als 2 Gew.-%, vorzugsweise weniger als 1 Gew.-%, besonders bevorzugt weniger als 5000 Gew.-ppm Amine und Amin-Zersetzungsprodukte. Es kann sich bei der Waschflüssigkeit um intrinsische Flüssigkeiten, d.h. wässrige Flüssigkeiten, die an anderer Stelle des Verfahrens anfallen, oder um von außen zugeführte wässrige Flüssigkeiten handeln.

Vorzugsweise umfasst die Waschflüssigkeit Absorberkopfkondensat, Desorberkopfkondensat und/oder Frischwasser.

In bevorzugten Ausführungsformen wird die Waschflüssigkeit ganz oder teilweise von Absorberkopfkondensat gebildet, das bei der stromabwärtigen Kühlung des entaminierten, entsäuerten Fluidstroms anfällt und in die Waschzone geleitet wird. Um eine ausreichende Benetzung der Einbauten in der Waschzone zu erreichen, kann es wünschenswert sein, darüber hinaus weitere wässrige Flüssigkeit in die Waschzone zu leiten. In einer bevorzugten Ausführungsform leitet man daher einen Teil des Desorberkopfkondensats als Waschflüssigkeit in die Waschzone. Die Verwendung des Desorberkopfkondensats als zusätzliche wässrige Flüssigkeit ist bevorzugt, weil sie ohne Auswirkung auf die Wasserbilanz des Gesamtsystems ist und diese wässrige Phase weitgehend von Aminverunreinigungen frei ist. In bestimmten Ausführungsformen umfasst die Waschflüssigkeit außerdem Frischwasser (Make up-Wasser), das in die Waschzone geleitet wird.

In bestimmten Fällen kann es bevorzugt sein, dass die Waschflüssigkeit kein Absorberkopfkondensat umfasst und z.B. ausschließlich von Desorberkopfkondensat und/oder Frischwasser gebildet wird. Dies ist z. B. der Fall, wenn das Absorberkopfkondensat flüchtige hydrophobe Bestandteile, wie Kohlenwasserstoffe, enthält, die zusammen mit wässrigem Kondensat aus dem entaminierten, entsäuerten Fluidstrom auskondensiert sind. Das zweiphasige Absorberkopfkondensat kann in diesen Fällen zu unerwünschter Schaumbildung in der Waschzone führen. In diesen Fällen kann es vorteilhaft sein, das Absorberkopfkondensat mit dem beladenen Absorptionsmittel zu vereinigen, z.B. indem das Absorberkopfkondensat in einen nachstehend beschriebenen Entspannungsbehälter geleitet wird.

In der Waschzone wird dem entsäuerten Fluidstrom die Waschflüssigkeit im Gegenstrom entgegengeführt. Vorzugsweise weist die Waschzone Füllkörper, Packungen und/oder Böden auf, um den Kontakt des Fluidstrom mit der Waschflüssigkeit zu intensivieren. Die Waschflüssigkeit kann oberhalb der Waschzone durch geeignete Flüssigkeitsverteiler über den Querschnitt der Waschzone verteilt werden.

In bevorzugten Ausführungsformen ist die Waschzone als oberhalb der Absorptionszone angeordnete Sektion einer Absorptionskolonne ausgebildet. Die Waschzone ist dazu ein als Rückwaschsektion oder Verstärkungsteil ausgebildeter Abschnitt der Absorptionskolonne oberhalb der Einspeisung des Absorptionsmittels.

In einer nicht erfindungsgemässen Ausführungsform recycliert man die Waschflüssigkeit über die Waschzone. Die Waschflüssigkeit wird hierzu unterhalb der Waschzone, z. B. mittels eines geeigneten Sammelbodens, gesammelt und über eine Pumpe zum oberen Ende der Waschzone gepumpt. Man kann die recyclierte Waschflüssigkeit kühlen, vorzugsweise auf eine Temperatur von 20 bis 70 °C, insbesondere 30 bis 60 °C. Hierzu wird die Waschflüssigkeit zweckmäßigerweise über einen Kühler umgepumpt. Um eine Akkumulation ausgewaschener Absorptionsmittelbestandteile in der Waschflüssigkeit zu vermeiden, wird ein Teilstrom der Waschflüssigkeit als aminbeladene Waschflüssigkeit aus der Waschzone ausgeleitet. Durch die Recyclierung und fakultative Kühlung der Waschflüssigkeit kann die Waschwirkung erhöht werden. Durch die Recyclierung tritt allerdings eine Rückvermischung der Waschflüssigkeit ein. Bei hohen Recyclierungsverhältnissen kann in der Waschzone nur noch maximal die Wirkung einer theoretischen Trennstufe erreicht werden, unabhängig von der Länge der Kontaktstrecke in der Waschzone. Das Recyclierungsverhältnis ist definiert als Verhältnis der umgepumpten Menge der Waschflüssigkeit zur Menge des ausgeleiteten Teilstroms. Bei Recyclierung der Waschflüssigkeit kann daher nur eine begrenzte Verringerung der Konzentration an mitgeführten Aminen im entsäuerten Fluidstrom erreicht werden. Die Recyclierung der Waschflüssigkeit ist daher nicht bevorzugt.

Erfindungsgemäss führt man die wässrige Waschflüssigkeit im einfachen Durchgang ohne Umpumpen durch die Waschzone. Die aus der Waschzone ablaufende Waschflüssigkeit wird vorzugsweise in die Absorptionszone geleitet.

Nach dem Verlassen der Waschzone ist der entaminierte, entsäuerte Fluidstrom wasserdampfgesättigt. Mit dem Wasserdampf führt der entaminierte, entsäuerte Fluidstrom noch Spuren von Aminen und/oder Amin-Zersetzungsprodukten mit sich. Zur weitergehenden Entfernung der mitgeführten Amine und/oder Amin-Zersetzungsprodukte kühlt man den entaminierten, entsäuerten Fluidstrom stromabwärts (bezogen auf die Strömungsrichtung des entaminierten, entsäuerten Fluidstroms) zur Waschzone, wobei man ein wässriges Kondensat auskondensiert. Das wässrige Kondensat wird vorliegend als Absorberkopfkondensat bezeichnet.

Der entaminierte, entsäuerte Fluidstrom wird bevorzugt auf eine Temperatur von 5 °C bis 40 °C, besonders bevorzugt auf eine Temperatur von 17 °C bis 27 °C abgekühlt. Zweckmäßigerweise kühlt man den entaminierten, entsäuerten Fluidstrom auf eine Temperatur ab, die niedriger ist als die Temperatur des wasserhaltigen Fluidstroms. Die Temperaturdifferenz zwischen dem gekühlten entaminierten, entsäuerten Fluidstrom und dem wasserhaltigen Fluidstrom beträgt z.B. mindestens 2 K, bevorzugt mindestens 5 K, besonders bevorzugt mindestens 10 K, am meisten bevorzugt 10 bis 30 K. Mit zunehmender Temperaturdifferenz wird ein wachsender Anteil des im entsäuerten wasserhaltigen Fluidstrom enthaltenen Wassers als Absorberkopfkondensat und darin gelöste restliche Aminmengen auskondensiert.

Die Kühlung des entaminierten, entsäuerten Fluidstroms stromabwärts zur Waschzone erfolgt vorzugsweise durch indirekten Wärmetausch (Indirektkühlung). Als Indirektkühler eignen sich alle Wärmetauscher, die zur Kühlung von Gasen oder Fluiden geeignet sind. Geeignet sind z.B. Mantelrohrwärmetauscher. Der entaminierte, entsäuerte Fluidstrom strömt durch die Rohre des Wärmetauschers nach unten. Kühlmedium strömt durch den Mantel des Wärmetauschers nach oben. Bei der Abkühlung des entaminierten, entsäuerten Fluidstroms kondensiert Flüssigkeit in den Rohren und fließt nach unten. Zur Abtrennung des Absorberkopfkondensats wird eine Phasentrenneinheit oder ein Abscheider (Knock-Out Drum) eingesetzt.

Da das Absorberkopfkondensat nur sehr geringe Mengen gelöster Amine und/oder Amin-Zersetzungsprodukte enthält, kann es als Waschflüssigkeit in die Waschzone geleitet werden.

Um einen Verlust der in der aminbeladenen Waschflüssigkeit und im Absorberkopfkondensat enthaltenen Amine zu vermeiden, werden die aminbeladene Waschflüssigkeit und das Absorberkopfkondensat in den Absorptionsmittelkreislauf eingeführt. Dies kann durch mittelbare oder unmittelbare Vereinigung mit dem beladenen und/oder regenerierten Absorptionsmittel erfolgen.

Unter unmittelbarer Vereinigung mit dem Absorptionsmittel versteht man das direkte Einleiten der aminbeladenen Waschflüssigkeit und/oder des Absorberkopfkondensats in das beladene und/oder regenerierte Absorptionsmittel, etwa in eine Leitung, die beladenes oder regeneriertes Absorptionsmittel führt, oder den Sumpf der Absorptions- oder Desorptionskolonne. Unter mittelbarer Vereinigung mit dem Absorptionsmittel wird verstanden, dass die aminbeladene Waschflüssigkeit und/oder das Absorberkopfkondensat zunächst z. B. zum Waschen oder Kühlen von Fluidströmen verwendet werden, aber letztlich mit dem beladenen und/oder regenerierten Absorptionsmittel vereinigt werden.

Im Allgemeinen ist es bevorzugt, die aminbeladene Waschflüssigkeit in die Absorptionszone zu leiten, in der die aminbeladene Waschflüssigkeit mit dem Absorptionsmittel vereinigt wird. Das Absorberkopfkondensat wird vorzugsweise als Waschflüssigkeit in die Waschzone geleitet.

Das mit Sauergasen beladene Absorptionsmittel wird in eine Desorptionszone geleitet, in der die Sauergase zumindest teilweise freigesetzt werden. Dabei erhält man ein regeneriertes Absorptionsmittel, das in die Absorptionszone zurückgeführt wird, und desorbierte Sauergase.

Im Allgemeinen regeneriert man die beladene Absorptionsflüssigkeit durch Erwärmung, z. B. auf 70 bis 150 °C, Entspannung, Strippen mit einem inerten Fluid oder eine Kombination zweier oder aller dieser Maßnahmen. Vorzugsweise regeneriert man die beladene Absorptionsflüssigkeit in einem Stripper. Das für die Strippung benötigte Strippgas wird durch teilweise Verdampfung der Absorptionsflüssigkeit im Sumpf des Strippers erzeugt.

Die bevorzugte Ausgestaltung der Desorption hängt vom Druck in der Absorptionszone ab. Weist der wasserhaltige Fluidstrom einen im Vergleich zur umgebenden Atmosphäre stark erhöhten Druck von 20 bis120 bar, bevorzugt 35 bis 95 bar, besonders bevorzugt 50 bis 70 bar auf, bietet sich zur Desorption die Entspannung auf einen Druck von 0,5 bis 5 bar, bevorzugt 0,7 bis 3,5 bar, besonders bevorzugt 0,9 bis 2,0 bar an. Weist der wasserhaltige Fluidstrom einen Druck von 0,5 bis 5 bar, bevorzugt 0,7 bis 3,5 bar, besonders bevorzugt 0,9 bis 2,0 bar auf, so bietet sich zur Desorption die Erwärmung des mit Sauergasen beladenen Absorptionsmittels auf eine Temperatur von 20 bis 150 °C, bevorzugt 100 bis 140 °C, besonders bevorzugt 110 bis 130 °C an. In einer bevorzugten Ausführungsform wird zur Regeneration des mit Sauergasen beladenen Absorptionsmittels in der Desorptionszone entspannt und erwärmt.

In einer bevorzugten Ausführungsform entspannt man das beladene Absorptionsmittel in einen Entspannungsbehälter, wobei man eine Gasphase und ein entspanntes Absorptionsmittel erhält. Das entspannte Absorptionsmittel wird dann in die Desorptionszone geleitet. Bei der Entspannung werden coabsorbierte Bestandteile des Fluidstroms, wie Inertgase, Sauerstoff und/oder Kohlenwasserstoffe, freigesetzt. Bei der Entspannung kann auch ein geringer Teil der Sauergase freigesetzt werden. Im Entspannungsbehälter wird der Druck vorzugsweise so eingestellt, dass nicht die Hauptmenge der Sauergase freigesetzt wird. In bestimmten Ausführungsformen kann der Druck im Entspannungsbehälter 1,0 bis 9 bar, bevorzugt 1,5 bis 6 bar betragen. Der Druck kann nur geringfügig größer oder sogar kleiner sein, als der Druck in der Desorptionszone, weshalb das entspannte Absorptionsmittel in bestimmten Ausführungsformen vom Entspannungsbehälter in die Desorptionszone gepumpt wird.

In bestimmten Ausführungsformen wird das Absorberkopfkondensat ganz oder teilweise in den Entspannungsbehälter geleitet und so in den Absorptionsmittelkreislauf eingeführt. Dies ist dann bevorzugt, wenn das Absorberkopfkondensat flüchtige, hydrophobe Bestandteile, wie Kohlenwasserstoffe, enthält. Im Entspannungsbehälter können die leichtflüchtigen Komponenten des Absorberkopfkondensats mit der Gasphase entweichen.

Bevor das regenerierte Absorptionsmittel wieder in die Absorptionszone eingeführt wird, wird es auf eine geeignete Absorptionstemperatur abgekühlt. Um die in dem heißen regenerierten Absorptionsmittel enthaltene Energie auszunutzen, ist es bevorzugt, das beladene Absorptionsmittel aus der Absorptionszone durch indirekten Wärmetausch mit dem heißen regenerierten Absorptionsmittel vorzuerwärmen. Durch den Wärmetausch wird das beladene Absorptionsmittel auf eine höhere Temperatur gebracht, so dass im Regenerationsschritt ein geringerer Energieeinsatz erforderlich ist. Durch den Wärmetausch kann auch bereits eine teilweise Regenerierung des beladenen Absorptionsmittels unter Freisetzung von Sauergasen erfolgen.

Die desorbierten Sauergase werden erfindungsgemäß durch eine Verstärkungszone geführt. Die am Kopf der Verstärkungszone austretenden Sauergase werden gekühlt, um eine wässrige Phase auszukondensieren, die vorliegend als Desorberkopfkondensat bezeichnet wird. Das Desorberkopfkondensat wird teilweise als Rücklauf in die Verstärkungszone zurückgeführt und teilweise aus dem Verfahren ausgeleitet wird. Durch das Ausleiten eines Teils des Desorberkopfkondensats wird die Wasserbilanz des Gesamtsystems aufrechterhalten und eine Akkumulierung von Wasser im System vermieden. Das Ausleiten kann z.B. mittels eines regelbaren Rücklaufteilers erfolgen. Das Ausleiten eines Teils des Desorberkopfkondensats erfolgt vorzugsweise nach Maßgabe der Wahrung der Wasserbilanz des Verfahrens. Parameter, wie der Flüssigkeitsstand in bestimmten Behältern des Absorptionsmittelkreislaufs oder die Konzentration des Amins im Absorptionsmittel, können kontinuierlich oder periodisch gemessen und zur Steuerung der Menge des ausgeleiteten Desorberkopfkondensats genutzt werden. Ein für die Flüssigkeitsstandsmessung geeigneter Bereich des Absorptionsmittelkreislaufs zeichnet sich dadurch aus, dass der Füllstand bei Akkumulierung von Wasser im Absorptionsmittelkreislauf steigt und bei Verlust von Wasser fällt. Bevorzugt erfolgt die Flüssigkeitsstandsmessung im Sumpf der Desorptionskolonne oder in einem Pufferbehälter, der mit dem Absorptionsmittelkreislauf kommuniziert.

Die Verstärkungszone, durch die die desorbierten Sauergase geleitet werden, ist vorzugsweise oberhalb der Desorptionszone angeordnet und in einer besonders bevorzugten Ausführungsform oberhalb der Desorptionszone angeordnet und in die Desorptionskolonne integriert.

Die Verstärkungszone weist eine strukturierte Packung, eine regellose Packung und/oder eine Mehrzahl von Böden auf. Vorzugsweise weist die strukturierte Packung oder die regellose Packung eine Höhe von mindestens 1,5 Meter, insbesondere wenigstens 1,8 Meter auf. Die Höhe der strukturierten Packung oder regellosen Packung beträgt z. B. bis zu 3,0 Meter. Die geometrische Fläche der strukturierten Packung der Verstärkungszone kann zwischen 100 und 600 m²/m³, bevorzugt zwischen 140 und 500 m²/m³, besonders bevorzugt zwischen 180 und 400 m²/m³ betragen.

Umfasst die Verstärkungszone Böden, beträgt die Zahl der Böden vorzugsweise wenigstens 4, insbesondere wenigstens 5, stärker bevorzugt wenigstens 6, und am meisten bevorzugt wenigstens 8. Die Zahl der Böden kann bis zu 14, bevorzugt bis zu 12 oder bis zu 10 betragen. Eine Bodenzahle von 6 bis 10 ist im Allgemeinen bevorzugt.

In der Verstärkungszone werden Spuren der von den freigesetzten Sauergasen mitgeführten Amine durch den Rücklauf eines Teils des Desorberkopfkondensats abgetrieben, so dass die am Kopf der Verstärkungszone austretenden Sauergase weitgehend frei von Aminverunreinigungen sind. Das Desorberkopfkondensat, das aus den am Kopf der Verstärkungszone austretenden Sauergase auskondensiert wird, ist daher ebenfalls von Aminverunreinigungen weitgehend frei und kann ohne nennenswerten Aminverlust teilweise aus dem Verfahren ausgeleitet werden. Je höher die Trennleistung der Verstärkungszone ist, umso geringer sind die Verluste von Aminen über den Sauergasstrom.

Das Desorberkopfkondensat enthält weniger als 500 Gew.-ppm, bevorzugt weniger als 300 Gew.-ppm, weiterhin bevorzugt weniger als 200 Gew.-ppm, besonders bevorzugt weniger als 100 Gew.-ppm, ganz besonders bevorzugt weniger als 50 Gew.-ppm, am meisten bevorzugt weniger als 30 Gew.-ppm Amine und Amin-Zersetzungsprodukte.

Das erfindungsgemäße Verfahren ist geeignet zur Behandlung von wasserhaltigen Fluidströmen, insbesondere wasserhaltigen Gasströmen aller Art. Bei den sauren Gasen handelt es sich insbesondere um CO₂, H₂S, COS und Merkaptane. Außerdem können auch SO₃, SO₂, CS₂ und HCN entfernt werden. In der Regel umfassen die sauren Gase zumindest CO₂ oder bestehen überwiegend aus CO₂.

In einer bevorzugten Ausführungsform weist der wasserhaltige Fluidstrom einen Wassergehalt von mindestens 20 %, bevorzugt mindestens 30 %, besonders bevorzugt mindestens 40 %, der Sättigungskonzentration an Wasser auf. Als die Sättigungskonzentration wird die Konzentration an Wasser bzw. Wasserdampf im Fluidstrom unter den Bedingungen der Temperatur und des Drucks, mit denen der Fluidstrom in die Absorptionszone eingeführt wird, angesehen, bei deren Überschreitung Wasser durch Taupunktunterschreitung eine eigene Phase im Fluidstrom bildet.

In einer bevorzugten Ausführungsform führt man den wasserhaltigen Fluidstrom mit einem Druck von 20 bis 120 bar, bevorzugt 35 bis 95 bar, besonders bevorzugt 50 bis 70 bar in die Absorptionszone ein.

All die im vorliegenden Dokument angegebenen Drücke sind Absolutdrücke.

In einer alternativen bevorzugten Ausführungsform führt man den wasserhaltigen Fluidstrom mit einem Druck von 0,1 bis 10 bar, bevorzugt 0,3 bis 3 bar, besonders bevorzugt 0,6 bis 1,5 bar in die Absorptionszone ein.

In einer bevorzugten Ausführungsform weist der wasserhaltige Fluidstrom einen Sauergas-Partialdruck auf, der 2,5 bar oder weniger, bevorzugt 1 bar oder weniger, besonders bevorzugt 500 mbar oder weniger beträgt.

Wasserhaltige Fluidströme, welche die sauren Gase enthalten, sind einerseits Gase, wie Erdgas, Synthesegas, Koksofengas, Spaltgas, Kohlevergasungsgas, Kreisgas, Deponiegase und Verbrennungsgase, und andererseits mit dem Absorptionsmittel im Wesentlichen nicht mischbare Flüssigkeiten, wie LPG (Liquefied Petroleum Gas) oder NGL (Natural Gas Liquids).

In bevorzugten Ausführungsformen ist der wasserhaltige Fluidstrom ein
(i) Wasserstoff enthaltender Fluidstrom; hierzu zählen Synthesegase, die z. B. durch Kohlevergasung oder Steamreforming herstellbar sind und gegebenenfalls einer Wassergas-Shift-Reaktion unterzogen sind; die Synthesegase werden z. B. zur Herstellung von Ammoniak, Methanol, Formaldehyd, Essigsäure, Harnstoff, zur Fischer-Tropsch-Synthese oder zur Energiegewinnung in einem Integrated Gasification Combined Cycle (IGCC) Prozess verwendet;
(ii) Kohlenwasserstoffe enthaltender Fluidstrom; hierzu zählen Erdgas, Abgase verschiedener Raffinerieprozesse, wie der Tailgas Unit (TGU), eines Visbreakers (VDU), eines katalytischen Crackers (LRCUU/FCC), eines Hydrocrackers (HCU), eines Hydrotreaters (HDS/HTU), eines Cokers (DCU), einer Atmosphärischen Destillation (CDU) oder eines Liquid Treaters (z. B. LPG).

Das erfindungsgemäße Verfahren ist zur Behandlung von sauerstoffhaltigen Fluidströmen, wie Rauchgasen, geeignet.

In bevorzugten Ausführungsformen entstammt der sauerstoffhaltige Fluidstrom
a) der Oxidation organischer Substanzen,
b) der Kompostierung oder Lagerung organischer Substanzen enthaltender Abfallstoffe, oder
c) der bakteriellen Zersetzung organischer Substanzen.

In einigen Ausführungsformen beträgt der Partialdruck von Kohlendioxid im Fluidstrom weniger als 500 mbar, z. B. 30 bis 150 mbar.

Die Oxidation kann unter Flammenerscheinung, d. h. als herkömmliche Verbrennung, oder als Oxidation ohne Flammenerscheinung, z. B. in Form einer katalytischen Oxidation oder Partialoxidation, durchgeführt werden. Organische Substanzen, die der Verbrennung unterworfen werden, sind üblicherweise fossile Brennstoffe wie Kohle, Erdgas, Erdöl, Benzin, Diesel, Raffinate oder Kerosin, Biodiesel oder Abfallstoffe mit einem Gehalt an organischen Substanzen. Ausgangsstoffe der katalytischen (Partial-) Oxidation sind z. B. Methanol oder Methan, das zu Ameisensäure oder Formaldehyd umgesetzt werden kann.

Abfallstoffe, die der Oxidation, der Kompostierung oder Lagerung unterzogen werden, sind typischerweise Hausmüll, Kunststoffabfälle oder Verpackungsmüll.

Die Verbrennung der organischen Substanzen erfolgt meistens in üblichen Verbrennungsanlagen mit Luft. Die Kompostierung und Lagerung organischer Substanzen enthaltender Abfallstoffe erfolgt im Allgemeinen auf Mülldeponien. Das Abgas bzw. die Abluft derartiger Anlagen kann vorteilhaft nach dem erfindungsgemäßen Verfahren behandelt werden.

Als organische Substanzen für bakterielle Zersetzung werden üblicherweise Stalldung, Stroh, Jauche, Klärschlamm, Fermentationsrückstände, Silage und dergleichen verwendet. Die bakterielle Zersetzung erfolgt z.B. in üblichen Biogasanlagen. Die Abluft derartiger Anlagen kann vorteilhaft nach dem erfindungsgemäßen Verfahren behandelt werden.

Das Verfahren eignet sich auch zur Behandlung der Abgase von Brennstoffzellen oder chemischer Syntheseanlagen, die sich einer (Partial-) Oxidation organischer Substanzen bedienen.

Das Absorptionsmittel umfasst wenigstens ein Amin. Vorzugsweise umfasst das Amin wenigstens ein primäres oder sekundäres Amin.

Bevorzugte Amine sind die folgenden:
(i) Amine der Formel I:

   NR¹(R²)₂ (I)

   worin R¹ unter C₂-C₆-Hydroxyalkylgruppen, C₁-C₆-Alkoxy-C₂-C₆-alkylgruppen, Hydroxy-C₁-C₆-Alkoxy-C₂-C₆-alkylgruppen und 1-Piperazinyl-C₂-C₆-alkylgruppen ausgewählt ist und R² unabhängig unter H, C₁-C₆-Alkylgruppen und C₂-C₆-Hydroxyalkylgruppen ausgewählt ist;
(ii) Amine der Formel II:

   R³R⁴N-X-NR⁵R⁶ (II)

   worin R³, R⁴, R⁵ und R⁶ unabhängig voneinander unter H, C₁-C₆-Alkylgruppen, C₂-C₆-Hydroxyalkylgruppen, C₁-C₆-Alkoxy-C₂-C₆-alkylgruppen und C₂-C₆-Aminoalkylgruppen ausgewählt sind und X für eine C₂-C₆-Alkylengruppe, -X¹-NR⁷-X²- oder -X¹-O-X²- steht, worin X¹ und X² unabhängig voneinander für C₂-C₆-Alkylengruppen stehen und R⁷ für H, eine C₁-C₆-Alkylgruppe, C₂-C₆-Hydroxyalkylgruppe oder C₂-C₆-Aminoalkylgruppe steht;
(iii) 5- bis 7-gliedrige gesättigte Heterocyclen mit wenigstens einem Stickstoffatom im Ring, die ein oder zwei weitere, unter Stickstoff und Sauerstoff ausgewählte Heteroatome im Ring enthalten können, und
(iv) Gemische davon.

Spezifische Beispiele sind:
(i) 2-Aminoethanol (Monoethanolamin), 2-(Methylamino)ethanol, 2-(Ethylamino)-ethanol, 2-(n-Butylamino)ethanol, 2-Amino-2-methylpropanol, N-(2-Aminoethyl)-piperazin, Methyldiethanolamin, Ethyldiethanolamin, Diemthylaminopropanol, t-Butylaminoethoxyethanol, 2-Aminomethylpropanol;
(ii) 3-Methylaminopropylamin, Ethylendiamin, Diethylentriamin, Triethylentetramin, 2,2-Dimethyl-1,3-diaminopropan, Hexamethylendiamin, 1,4-Diaminobutan, 3,3-Iminobispropylamin, Tris(2-aminoethyl)amin, Bis(3-dimethylamino-propyl)amin, Tetramethylhexamethylendiamin;
(iii) Piperazin, 2-Methylpiperazin, N-Methylpiperazin, 1-Hydroxyethyl-piperazin, 1,4-Bis-hydroxyethyl-piperazin, 4-Hydroxyethyl-piperidin, Homopiperazin, Piperidin, 2-Hydroxyethylpiperidin und Morpholin; und
(iv) Gemische davon.

In einer bevorzugten Ausführungsform umfasst das Absorptionsmittel mindestens eines der Amine Monoethanolamin (MEA), Methylaminopropylamin (MAPA), Piperazin, Diethanolamin (DEA), Triethanolamin (TEA), Diethylethanolamin (DEEA), Diisopropylamin (DIPA), Aminoethoxyethanol (AEE), Dimethylaminopropanol (DIMAP) und Methyldiethanolamin (MDEA) oder Gemische davon.

Im Allgemeinen umfasst das Absorptionsmittel 10 bis 60 Gew.-% Amin.

Das Absorptionsmittel kann auch Additive, wie Korrosionsinhibitoren, Enzyme etc. enthalten. Im Allgemeinen liegt die Menge an derartigen Additiven im Bereich von etwa 0,01-3 Gew.-% des Absorptionsmittels.

Die Erfindung wird durch die beigefügten Zeichnungen und die nachfolgenden Beispiele näher veranschaulicht.
Figur 1 zeigt schematisch eine Anlage zur Durchführung eines nicht erfindungsgemäßen Verfahrens, wobei zur Wahrung der Wasserbilanz ein Teil des wässrigen Kondensats aus dem entaminierten, entsäuerten Fluidstrom ausgeleitet wird.
Figur 2 zeigt schematisch eine Anlage zur Durchführung eines nicht erfindungsgemäßen Verfahrens, wobei zur Wahrung der Wasserbilanz ein Teil des wässrigen Kondensats aus den desorbierten Sauergase ausgeleitet wird, wobei die Sauergase nicht durch eine Verstärkungszone geführt werden.
Figur 3 zeigt eine zur Durchführung des erfindungsgemäßen Verfahrens geeignete Anlage. Die desorbierten Sauergase werden durch eine Verstärkungszone geführt, bevor aus den desorbierten Sauergasen ein Desorberkopfkondensat auskondensiert und teilweise ausgeleitet wird.

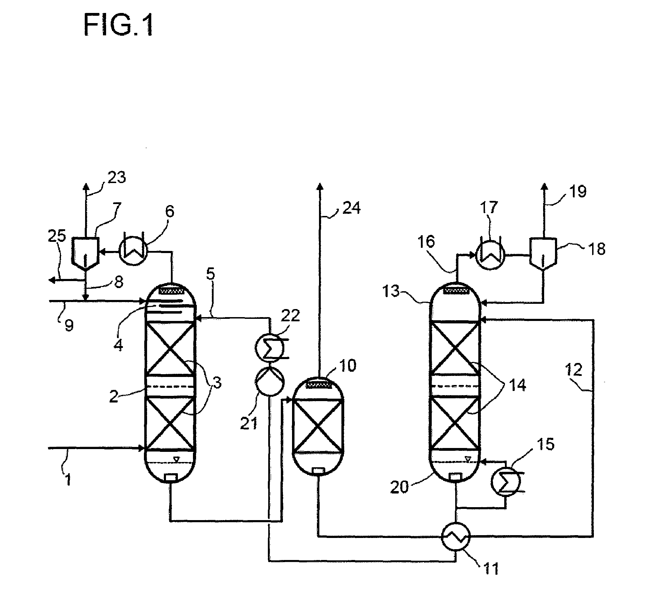

Gemäß Figur 1 wird ein wasserhaltiger Fluidstrom 1 in den unteren Teil einer Absorptionskolonne 2 geleitet. Die Absorptionskolonne 2 weist eine Absorptionszone 3 und eine Waschzone 4 auf. In der Absorptionszone 3 wird der wasserhaltige Fluidstrom im Gegenstrom mit einem Absorptionsmittel in Kontakt gebracht, das über die Leitung 5 oberhalb der Absorptionszone in die Absorptionskolonne 2 eingeführt wird. Der entsäuerte Fluidstrom wird in der Waschzone 4 mit einem wässrigen Kondensat und Frischwasser gewaschen, wobei das wässrige Kondensat durch Abkühlen des entaminierten, entsäuerten Fluidstroms in Kühler 6 gewonnen, im Phasentrenngefäß 7 gesammelt und über Leitung 8 in die Waschzone geleitet wird. Frischwasser wird über Leitung 9 herangeführt. Der behandelte Gasstrom verlässt das Phasentrenngefäß 7 über die Leitung 23. Ein Teil des wässrigen Kondensats wird über Leitung 25 ausgeleitet, wodurch die Akkumulation von Wasser im Absorptionsmittel verhindert wird.

Das mit Sauergasen beladene Absorptionsmittel wird am Boden der Absorptionskolonne 2 entnommen und über ein Drosselventil (nicht dargestellt) in das Entspannungsgefäß 10 entspannt. Die Entspannung führt zur Desorption coabsorbierter Bestandteile des Fluidstroms und eines Teils der Sauergase, die über Strom 24 entnommen werden. Das entspannte Absorptionsmittel wird über einen Wärmetauscher 11 und Leitung 12 in eine Desorptionskolonne 13 geführt. Die Desorptionskolonne 13 weist eine Desorptionszone 14 auf. Im unteren Teil der Desorptionskolonne 13 wird das entspannte Absorptionsmittel über den Verdampfer 15 erwärmt und partiell verdampft. Durch die Temperaturerhöhung werden die absorbierten Sauergase freigesetzt. Die Sauergase werden über die Leitung 16 am Kopf der Desorptionskolonne 13 abgeführt und dem Kühler 17 zugeführt. Am Kühler 17 wird ein Desorberkopfkondensat gewonnen, das im Phasentrenngefäß 18 gesammelt und in die Desorptionskolonne zurückgeführt wird. Die Sauergase werden als Strom 19 entnommen. Das regenerierte Absorptionsmittel 20 wird über den Wärmetauscher 11, Pumpe 21, den Kühler 22 und Leitung 5 wieder zur Absorptionskolonne 2 zurückgeführt.

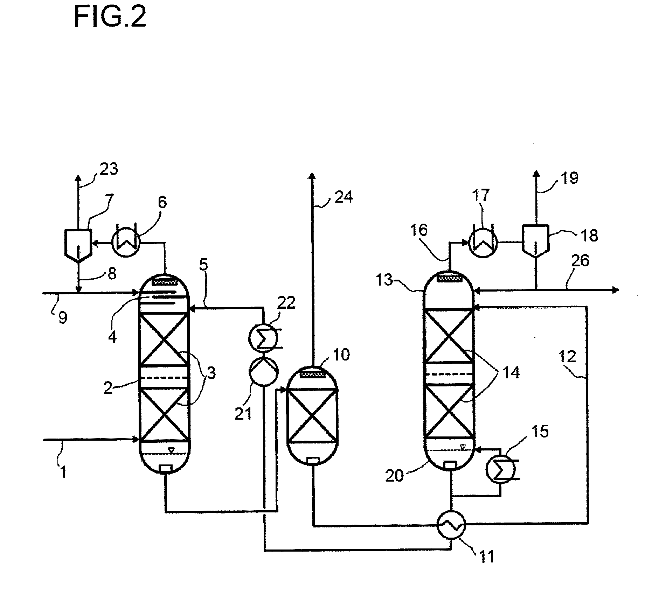

In Figur 2 haben gleiche Bezugszeichen die gleiche Bedeutung wie in Figur 1. Im Unterschied zur Fig. 1 wird kein wässriges Kondensat vom Phasentrenngefäß 7 ausgeleitet. Zur Wahrung der Wasserbilanz leitet man einen Teil des Desorberkopfkondensats, das im Phasentrenngefäß 18 anfällt, über Leitung 26 aus.

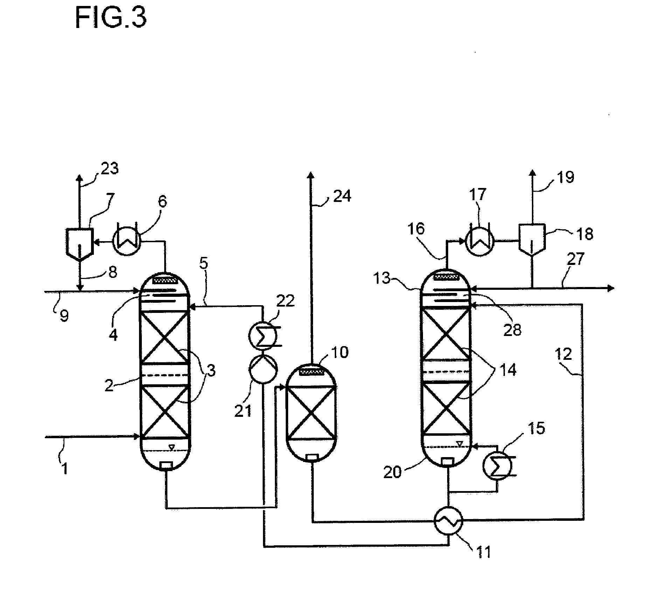

Figur 3 zeigt eine erfindungsgemäße Ausführungsform. In Figur 3 haben gleiche Bezugszeichen die gleiche Bedeutung wie in Figur 1. Gegenüber dem in Figur 2 dargestellten Verfahren wurde im oberen Bereich der Desorptionskolonne die Verstärkungszone 28 integriert. Zur Wahrung der Wasserbilanz leitet man einen Teil des Desorberkopfkondensats, das im Phasentrenngefäß 18 anfällt, über Leitung 27 aus.

### Vergleichsbeispiel 1

Mittels eines Simulationsmodells wurden Rechnungen durchgeführt. Basis des Simulationsmodells ist ein thermodynamisches Modell auf Basis des Electolyte-NRTL Ansatzes nach Chen et al. (Chen, C.C; Evans, L.B.: A local Composition Model for the Excess Gibbs Energy of Aqueous Electrolyte Solutions, AIChE J. (1986) 32(3), 444), mittels dessen die Phasengleichgewichte für dieses System beschrieben werden können. Die Simulation der Absorptionsvorgänge wird mittels eines stoffübergangsbasierten Ansatzes beschrieben; Details dazu sind bei Asprion (Asprion, N.: Nonequilibrium Rate-Based Simulation of Reactive Systems: Simulation Model, Heat Transfer, and Influence of Film Discretization, Ind. Eng. Chem. Res. (2006) 45(6), 2054-2069) beschrieben.

Man simulierte ein Verfahren in einer Anlage gemäß Figur 1. Die Absorptionskolonne 2 hatte einen Durchmesser von 2220 mm und wies zwei regellose Packungen 3 (INTALOX® Metal Tower Packing IMTP 25, Koch-Glitsch, Wichita USA), jeweils mit einer Packungshöhe von 4 Metern auf. Die Waschzone 4 umfasste 3 Böden. Die Desorptionskolonne 13 hatte einen Durchmesser von 1220 mm und wies zwei regellose Packungen 14 (PRM 35, von Pall Corporation, Port Washingtion, NY, USA), jeweils mit einer Packungshöhe von 5 Metern auf.

Eine wässrige Lösung mit 32 Gew.-% Methyldiethanolamin und 8 Gew.-% Piperazin wurde als Absorptionsmittel verwendet. Das Absorptionsmittel wurde mit 60262 kg/h mit einer Temperatur von 40 °C über Leitung 5 in die Absorptionszone geleitet. Als wasserhaltiger Fluidstrom wurden 151609 kg/h Erdgas (88,52 Vol.-% CH₄, 9,72 Vol.-% C₂H₆, 0,94 Vol.-% CO₂, 0,58 Vol.-% N₂, 0,23 Vol.-% H₂O) mit einer Temperatur von 35 °C und einem Druck von 53,7 bar zugeführt. Der Zufluss an Waschwasser in die Waschzone 4 betrug 197 kg/h, wobei das Waschwasser 194 kg/h recycliertes, auf 22 °C gekühltes wässriges Kondensat und 3 kg/h Frischwasser (Make up Water) enthielt. Von den über Kühler 6 und Phasentrenngefäß 7 insgesamt anfallenden 358 kg/h wässrigen Kondensats wurden 164 kg/h über Leitung 25 ausgeleitet. Über Leitung 23 verließen 147205 kg/h an behandeltem Erdgas mit einer Temperatur von 22 °C, einem Druck von 53,6 bar, einem Wassergehalt von 0,094 Vol.-% und einem CO₂ Gehalt von 2 Vol.-ppm das Verfahren. 64505 kg/h an mit Sauergasen beladener Absorptionslösung wurden am unteren Ende der Absorptionszone mit einer Temperatur von 39,8 °C abgezogen und in den Entspannungsbehälter 10 auf einen Druck von 6 bar entspannt. Am Kopf des Entspannungsbehälters 10 wurden 639 kg/h an desorbierten Gasen abgezogen, die im Wesentlichen aus Methan und Ethan bestanden.

Das Absorptionsmittel wurde am Sumpf des Entspannungsbehälters 10 abgezogen und über den Wärmetauscher 11 in die Desorptionskolonne 13 geführt und darin durch den Verdampfer 15 auf 130,9 °C erhitzt. Die desorbierten Sauergase wurden im Kühler 17 von 113,5 °C auf 40 °C abgekühlt. Die dabei gebildeten 2272 kg/h an wässriger Phase wurden in der Phasentrenneinheit 18 von den Sauergasen abgetrennt und zurück in die Desorptionskolonne geleitet.

Der jährliche Aminverlust der Anlage beträgt 6.366 t; dies entspricht 53 % der 12 t ursprünglich eingesetzten Amins.

### Vergleichsbeispiel 2

Man simulierte ein Verfahren in einer Anlage gemäß Figur 2. Der Aufbau der Absorptionskolonne 2 und Desorptionskolonne 13 entspricht dem Vergleichsbeispiel 1.

Die Zusammensetzung des Absorptionsmittels und des Fluidstroms entspricht dem Vergleichsbeispiel 1. Das Absorptionsmittel wurde mit 60263 Kg/h mit einer Temperatur von 40 °C über Leitung 5 in die Absorptionszone geleitet. 151609 kg/h Erdgas wurden mit einer Temperatur von 35 °C und mit einem Druck von 53,7 bar zugeführt. Der Zufluss an Waschwasser in die Waschzone 4 betrug 361 kg/h, wobei das Waschwasser 358 kg/h recycliertes, auf 22 °C gekühltes wässriges Kondensat und 3 kg/h Frischwasser enthielt. Über Leitung 23 verließen 147206 kg/h an behandeltem Erdgas mit einer Temperatur von 22 °C, einem Druck von 53,6 bar, einem Wassergehalt von 0,094 Vol.-% und einem CO₂ Gehalt von 3 Vol.-ppm das Verfahren. 64834 kg/h an mit Sauergasen beladener Absorptionslösung wurden am unteren Ende der Absorptionszone mit einer Temperatur von 39,8 °C ausgeleitet und in den Entspannungsbehälter 10 auf einen Druck von 6 bar entspannt. Am Kopf des Entspannungsbehälters 10 wurden 638 kg/h desorbierter Gase an desorbierten Gasen abgezogen, die im Wesentlichen aus Methan und Ethan bestanden.

Das Absorptionsmittel wurde am Sumpf des Entspannungsbehälters 10 abgezogen und über den Wärmetauscher 11 in die Desorptionskolonne 13 geführt und darin durch den Verdampfer 15 auf 130,8 °C erhitzt. Die desorbierten Sauergasen wurden im Kühler 17 von 113,5 °C auf 40 °C abgekühlt. Die dabei gebildeten 2102 kg/h an wässriger Phase wurden in der Phasentrenneinheit 18 von den Sauergasen abgetrennt. Vom Desorberkopfkondensat wurden 165 kg/h entfernt und der Rest zurück in die Desorptionskolonne geleitet.

Der jährliche Aminverlust beträgt 5.671 t; dies entspricht 47 % der 12 t ursprünglich eingesetzten Amins.

### Erfindungsgemäßes Beispiel 3

Man simulierte ein erfindungsgemäßes Verfahren in einer Anlage gemäß Figur 3. Der Aufbau der Absorptionskolonne 2 und Desorptionskolonne 13 entspricht dem Vergleichsbeispiel 1, wobei jedoch in der Desorptionskolonne oberhalb des Zulaufs des beladenen Absorptionsmittels über Leitung 12 eine Verstärkungszone 28 installiert war, die 4 Böden aufwies.

Die Zusammensetzung des Absorptionsmittels und des Fluidstroms entspricht dem Vergleichsbeispiel 1. Das Absorptionsmittel wurde mit 60279 Kg/h mit einer Temperatur von 40 °C über Leitung 5 in die Absorptionszone geleitet. 151609 kg/h Erdgas wurden mit einer Temperatur von 35 °C und mit einem Druck von 53,7 bar zugeführt. Der Zufluss an Waschwasser in die Waschzone 4 betrug 363 kg/h, wobei das Waschwasser 359 kg/h recycliertes, auf 22 °C gekühltes wässriges Kondensat und 4 kg/h Frischwasser, enthielt. Über Leitung 23 verließen 147208 kg/h an behandeltem Erdgas mit einer Temperatur von 22 °C, einem Druck von 53,6 bar, einem Wassergehalt von 0,094 Vol.-% und einem CO₂ Gehalt von 3 Vol.-ppm das Verfahren. 64849 kg/h an mit Sauergasen beladener Absorptionslösung wurden am unteren Ende der Absorptionszone mit einer Temperatur von 39,8 °C ausgeleitet und in den Entspannungsbehälter 10 auf einen Druck von 6 bar entspannt. Am Kopf des Entspannungsbehälters 10 wurden 636 kg/h desorbierter Gase abgezogen, die im Wesentlichen aus Methan und Ethan bestanden.

Das Absorptionsmittel wurde am Sumpf des Entspannungsbehälters 10 abgezogen und über den Wärmetauscher 11 in die Desorptionskolonne 13 geführt und darin durch den Verdampfer 15 auf 130,8 °C erhitzt. Die desorbierten Sauergase wurden im Kühler 17 von 113,4 °C auf 40 °C abgekühlt. Die dabei gebildeten 1875 kg/h an wässriger Phase wurden in der Phasentrenneinheit 18 von den Sauergasen abgetrennt. Vom Desorberkopfkondensat wurden 165 kg/h entfernt und der Rest zurück in die Desorptionskolonne geleitet.

Der jährliche Aminverlust beträgt 0,396 t; dies entspricht 3,3 % der 12 t ursprünglich eingesetzten Amins.

### Erfindungsgemäßes Beispiel 4

Beispiel 3 wird wiederholt, wobei jedoch die Verstärkungszone 28 5 Böden aufwies.

Das Absorptionsmittel wurde mit 60279 Kg/h mit einer Temperatur von 40 °C über Leitung 5 in die Absorptionszone geleitet. 151609 kg/h Erdgas wurden mit einer Temperatur von 35 °C und mit einem Druck von 53,7 bar zugeführt. Der Zufluss an Waschwasser in die Waschzone 4 betrug 364 kg/h, wobei das Waschwasser 359 kg/h recycliertes, auf 22 °C gekühltes wässriges Kondensat und 5 kg/h Frischwasser, enthielt. Über Leitung 23 verließen 147208 kg/h an behandeltem Erdgas mit einer Temperatur von 22 °C, einem Druck von 53,6 bar, einem Wassergehalt von 0,094 Vol.-% und einem CO₂ Gehalt von 3 Vol.-ppm das Verfahren. 64849 kg/h an mit Sauergasen beladener Absorptionslösung wurden am unteren Ende der Absorptionszone mit einer Temperatur von 39,8 °C ausgeleitet und in den Entspannungsbehälter 10 auf einen Druck von 6 bar entspannt. Am Kopf des Entspannungsbehälters 10 wurden 636 kg/h desorbierter Gase abgezogen, die im Wesentlichen aus Methan und Ethan bestanden.

Das Absorptionsmittel wurde am Sumpf des Entspannungsbehälters 10 abgezogen und über den Wärmetauscher 11 in die Desorptionskolonne 13 geführt und darin durch den Verdampfer 15 auf 130,8 °C erhitzt. Die desorbierten Sauergase wurden im Kühler 17 von 113,4 °C auf 40 °C abgekühlt. Die dabei gebildeten 1875 kg/h an wässriger Phase wurden in der Phasentrenneinheit 18 von den Sauergasen abgetrennt. Vom Desorberkopfkondensat wurden 165 kg/h entfernt und der Rest zurück in die Desorptionskolonne geleitet.

Der jährliche Aminverlust beträgt 0,231 t; dies entspricht 1,93 % der 12 t ursprünglich eingesetzten Amins.

### Erfindungsgemäßes Beispiel 5

Beispiel 3 wird wiederholt, wobei jedoch die Verstärkungszone 28 6 Böden aufwies.

Das Absorptionsmittel wurde mit 60279 Kg/h mit einer Temperatur von 40 °C über Leitung 5 in die Absorptionszone geleitet. 151609 kg/h Erdgas wurden mit einer Temperatur von 35 °C und mit einem Druck von 53,7 bar zugeführt. Der Zufluss an Waschwasser in die Waschzone 4 betrug 364 kg/h, wobei das Waschwasser 359 kg/h recycliertes, auf 22 °C gekühltes wässriges Kondensat und 5 kg/h Frischwasser, enthielt. Über Leitung 23 verließen 147208 kg/h an behandeltem Erdgas mit einer Temperatur von 22 °C, einem Druck von 53,6 bar, einem Wassergehalt von 0,094 Vol.-% und einem CO₂ Gehalt von 3 Vol.-ppm das Verfahren. 64849 kg/h an mit Sauergasen beladener Absorptionslösung wurden am unteren Ende der Absorptionszone mit einer Temperatur von 39,8 °C ausgeleitet und in den Entspannungsbehälter 10 auf einen Druck von 6 bar entspannt. Am Kopf des Entspannungsbehälters 10 wurden 636 kg/h desorbierter Gase abgezogen, die im Wesentlichen aus Methan und Ethan bestanden.

Das Absorptionsmittel wurde am Sumpf des Entspannungsbehälters 10 abgezogen und über den Wärmetauscher 11 in die Desorptionskolonne 13 geführt und darin durch den Verdampfer 15 auf 130,8 °C erhitzt. Die desorbierten Sauergase wurden im Kühler 17 von 113,4 °C auf 40 °C abgekühlt. Die dabei gebildeten 1875 kg/h an wässriger Phase wurden in der Phasentrenneinheit 18 von den Sauergasen abgetrennt. Vom Desorberkopfkondensat wurden 165 kg/h entfernt und der Rest zurück in die Desorptionskolonne geleitet.

Der jährliche Aminverlust beträgt 0,152 t; dies entspricht 1,27 % der 12 t ursprünglich eingesetzten Amins.

### Erfindungsgemäßes Beispiel 6

Beispiel 3 wird wiederholt, wobei jedoch die Verstärkungszone 28 8 Böden aufwies.

Das Absorptionsmittel wurde mit 60279 Kg/h mit einer Temperatur von 40 °C über Leitung 5 in die Absorptionszone geleitet. 151609 kg/h Erdgas wurden mit einer Temperatur von 35 °C und mit einem Druck von 53,7 bar zugeführt. Der Zufluss an Waschwasser in die Waschzone 4 betrug 364 kg/h, wobei das Waschwasser 359 kg/h recycliertes, auf 22 °C gekühltes wässriges Kondensat und 5 kg/h Frischwasser, enthielt. Über Leitung 23 verließen 147208 kg/h an behandeltem Erdgas mit einer Temperatur von 22 °C, einem Druck von 53,6 bar, einem Wassergehalt von 0,094 Vol.-% und einem CO₂ Gehalt von 3 Vol.-ppm das Verfahren. 64849 kg/h an mit Sauergasen beladener Absorptionslösung wurden am unteren Ende der Absorptionszone mit einer Temperatur von 39,8 °C ausgeleitet und in den Entspannungsbehälter 10 auf einen Druck von 6 bar entspannt. Am Kopf des Entspannungsbehälters 10 wurden 636 kg/h desorbierter Gase abgezogen, die im Wesentlichen aus Methan und Ethan bestanden.

Das Absorptionsmittel wurde am Sumpf des Entspannungsbehälters 10 abgezogen und über den Wärmetauscher 11 in die Desorptionskolonne 13 geführt und darin durch den Verdampfer 15 auf 130,8 °C erhitzt. Die desorbierten Sauergase wurden im Kühler 17 von 113,4 °C auf 40 °C abgekühlt. Die dabei gebildeten 1875 kg/h an wässriger Phase wurden in der Phasentrenneinheit 18 von den Sauergasen abgetrennt. Vom Desorberkopfkondensat wurden 165 kg/h entfernt und der Rest zurück in die Desorptionskolonne geleitet.

Der jährliche Aminverlust beträgt 0,095 t; dies entspricht 0,80 % der 12 t ursprünglich eingesetzten Amins.

## Patentansprüche

1. Verfahren zur Abtrennung von Sauergasen aus einem wasserhaltigen Fluidstrom, wobei man
a) den wasserhaltigen Fluidstrom in einer Absorptionszone mit einem Absorptionsmittel, das mindestens ein Amin enthält, in Kontakt bringt, wobei man einen entsäuerten Fluidstrom und ein mit Sauergasen beladenes Absorptionsmittel erhält,
b) den entsäuerten Fluidstrom in einer Waschzone mit einer wässrigen Waschflüssigkeit in Kontakt bringt, durch die man die Waschflüssigkeit im einfachen Durchgang ohne Umpumpen führt, um mitgeführtes Amin zumindest teilweise in die Waschflüssigkeit zu überführen, wobei man einen entaminierten, entsäuerten Fluidstrom und eine aminbeladene Waschflüssigkeit erhält,
c) den entaminierten, entsäuerten Fluidstrom stromabwärts zur Waschzone kühlt, wobei man aus dem entaminierten, entsäuerten Fluidstrom ein Absorberkopfkondensat auskondensiert,
d) das beladene Absorptionsmittel in eine Desorptionszone leitet, in der die Sauergase zumindest teilweise freigesetzt werden, wobei man ein regeneriertes Absorptionsmittel und desorbierte Sauergase erhält,
e) das regenerierte Absorptionsmittel in die Absorptionszone zurückführt, um einen Absorptionsmittelkreislauf zu bilden,
f) die aminbeladene Waschflüssigkeit und das Absorberkopfkondensat in den Absorptionsmittelkreislauf einführt, und
g) die desorbierten Sauergase durch eine Verstärkungszone, die eine strukturierte Packung, eine regellose Packung und/oder eine Mehrzahl von Böden aufweist, führt und die am Kopf der Verstärkungszone austretenden Sauergase kühlt, um aus den Sauergasen ein Desorberkopfkondensat auszukondensieren, das teilweise in die Verstärkungszone zurückgeführt und teilweise aus dem Verfahren ausgeleitet wird.

2. Verfahren nach Anspruch 1, wobei das Desorberkopfkondensat weniger als 500 Gew.-ppm Amine und Amin-Zersetzungsprodukte enthält.

3. Verfahren nach Anspruch 1 oder 2, wobei die Waschflüssigkeit Absorberkopfkondensat, Desorberkopfkondensat und/oder Frischwasser umfasst.

4. Verfahren nach einem der vorhergehenden Ansprüche, wobei man die aminbeladene Waschflüssigkeit in die Absorptionszone leitet.

5. Verfahren nach einem der vorhergehenden Ansprüche, wobei man den entaminierten, entsäuerten Fluidstrom in einem lndirektkühler kühlt.

6. Verfahren nach einem der vorhergehenden Ansprüche, wobei man den entaminierten, entsäuerten Fluidstrom auf eine Temperatur abkühlt, die niedriger ist als die Temperatur des wasserhaltigen Fluidstroms.

7. Verfahren nach einem der vorhergehenden Ansprüche, wobei die strukturierte Packung oder die regellose Packung eine Höhe von mindestens 1,5 Metern aufweist.

8. Verfahren nach einem der Ansprüche 1 bis 6, wobei die Zahl der Böden mindestens 4 beträgt.

9. Verfahren nach einem der vorhergehenden Ansprüche, wobei man das beladene Absorptionsmittel in der Desorptionszone durch mindestens eine unter Entspannen, Strippen mit einem Inertgas und Erwärmen ausgewählte Maßnahme regeneriert.

10. Verfahren nach Anspruch 9, wobei man das mit Sauergasen beladene Absorptionsmittel vor dem Eintritt in die Desorptionszone durch indirekten Wärmetausch mit dem regenerierten Absorptionsmittel vorerwärmt.

11. Verfahren nach einem der vorhergehenden Ansprüche, wobei man das beladene Absorptionsmittel in einen Entspannungsbehälter entspannt, wobei man eine Gasphase und ein entspanntes Absorptionsmittel erhält und das entspannte Absorptionsmittel in die Desorptionszone leitet.

12. Verfahren nach Anspruch 11, wobei man zumindest einen Teil des Absorberkopfkondensats in den Entspannungsbehälter einleitet.

13. Verfahren nach einem der vorhergehenden Ansprüche, wobei der wasserhaltige Fluidstrom einen Wassergehalt aufweist, der mindestens 20 % der Sättigungskonzentration an Wasser beträgt.

14. Verfahren nach einem der vorhergehenden Ansprüche, wobei man den wasserhaltigen Fluidstrom mit einem Druck von 50 bis 70 bar in die Absorptionszone einführt.

15. Verfahren nach einem der vorhergehenden Ansprüche, wobei der wasserhaltige Fluidstrom einen Sauergas-Partialdruck von weniger als 2,5 bar aufweist.

16. Verfahren nach einem der vorhergehenden Ansprüche, wobei der wasserhaltige Fluidstrom ausgewählt ist unter
a) Erdgas,
b) Synthesegas,
c) Abgasen verschiedener Raffinerieprozesse,
d) Verbrennungsgasen,
oder
e) Gas, das aus einem Claus-Prozess erhalten wird.

## Claims

1. A process for separating off acid gases from a water-comprising fluid stream, in which
a) the water-comprising fluid stream is contacted in an absorption zone with an absorbent that comprises at least one amine, wherein a deacidified fluid stream and an acid gas-loaded absorbent is obtained,
b) the deacidified fluid stream is contacted with an aqueous scrubbing liquid in a scrubbing zone through which the scrubbing liquid is conducted in a single pass without pumping it in circulation, in order to transfer entrained amine at least in part to the scrubbing liquid, wherein a deaminated, deacidified fluid stream and an amine-loaded scrubbing liquid are obtained,
c) the deaminated, deacidified fluid stream is cooled downstream of the scrubbing zone, wherein an absorber top condensate is condensed out of the deaminated, deacidified fluid stream,
d) the loaded absorbent is passed into a desorption zone in which the acid gases are at least in part released, wherein a regenerated absorbent and desorbed acid gases are obtained,
e) the regenerated absorbent is returned to the absorption zone in order to form an absorbent circuit,
f) the amine-loaded scrubbing liquid and the absorber top condensate are introduced into the absorbent circuit, and
g) the desorbed acid gases are conducted through an enrichment zone which has a structured packing, a random packing and/or a plurality of trays and the acid gases exiting at the top of the enrichment zone are cooled, in order to condense out of the acid gases a desorber top condensate which in part is returned to the enrichment zone and in part is passed out of the process.

2. The process according to claim 1, wherein the desorber top condensate comprises less than 500 ppm by weight of amines and amine decomposition products.

3. The process according to claim 1 or 2, wherein the scrubbing liquid comprises absorber top condensate, desorber top condensate and/or fresh water.

4. The process according to any one of the preceding claims, wherein the amine-loaded scrubbing liquid is passed into the absorption zone.

5. The process according to any one of the preceding claims, wherein the deaminated, deacidified fluid stream is cooled in an indirect cooler.

6. The process according to any one of the preceding claims, wherein the deaminated, deacidified fluid stream is cooled to a temperature which is lower than the temperature of the water-comprising fluid stream.

7. The process according to any one of the preceding claims, wherein the structured packing or the random packing has a height of at least 1.5 meters.

8. The process according to any one of claims 1 to 6, wherein the number of the trays is at least 4.

9. The process according to any one of the preceding claims, wherein the loaded absorbent is regenerated in the desorption zone by at least one measure selected from expansion, stripping with an inert gas and heating.

10. The process according to claim 9, wherein the absorbent loaded with acid gases is preheated by indirect heat exchange with the regenerated absorbent prior to entry into the desorption zone.

11. The process according to any one of the preceding claims, wherein the loaded absorbent is expanded into an expansion vessel, wherein a gas phase and an expanded absorbent are obtained and the expanded absorbent is passed into the desorption zone.

12. The process according to claim 11, wherein at least a part of the absorber top condensate is introduced into the expansion vessel.

13. The process according to any one of the preceding claims, wherein the water-comprising fluid stream has a water content which is at least 20% of the saturation concentration of water.

14. The process according to any one of the preceding claims, wherein the water-comprising fluid stream is introduced into the absorption zone at a pressure of 50 to 70 bar.

15. The process according to any one of the preceding claims, wherein the water-comprising fluid stream has an acid gas partial pressure of less than 2.5 bar.

16. The process according to any one of the preceding claims, wherein the water-comprising fluid stream is selected from
a) natural gas,
b) synthesis gas,
c) off-gases of various refinery processes,
d) combustion gases,
or
e) gas that is obtained from a Claus process.

## Revendications

1. Procédé de séparation de gaz acides d'un courant fluide contenant de l'eau, selon lequel
a) le courant fluide contenant de l'eau est mis en contact dans une zone d'absorption avec un agent d'absorption qui contient au moins une amine, un courant fluide désacidifié et un agent d'absorption chargé avec des gaz acides étant obtenus,
b) le courant fluide désacidifié est mis en contact dans une zone de lavage avec un liquide de lavage aqueux, le liquide de lavage étant mis en circulation dans celle-ci en passage simple sans pompage afin de transférer au moins en partie l'amine entraînée dans le liquide de lavage, un courant fluide désacidifié et désaminé et un liquide de lavage chargé avec l'amine étant obtenus,
c) le courant fluide désacidifié et désaminé est refroidi en aval de la zone de lavage, un condensat de tête d'absorbeur étant condensé à partir du courant fluide désacidifié et désaminé,
d) l'agent d'absorption chargé est conduit dans une zone de désorption dans laquelle les gaz acides sont au moins partiellement libérés, un agent d'absorption régénéré et des gaz acides désorbés étant obtenus,
e) l'agent d'absorption régénéré est recyclé dans la zone d'absorption pour former un circuit d'agent d'absorption,
f) le liquide de lavage chargé avec l'amine et le condensat de tête d'absorbeur sont introduits dans le circuit d'agent d'absorption, et
g) les gaz acides désorbés passent dans une zone d'enrichissement, qui comprend un garnissage structuré, un garnissage irrégulier et/ou une pluralité de plateaux, et les gaz acides sortant à la tête de la zone d'enrichissement sont refroidis, afin de condenser un condensat de tête de désorbeur à partir des gaz acides, qui est en partie recyclé dans la zone d'enrichissement et en partie déchargé du procédé.

2. Procédé selon la revendication 1, dans lequel le condensat de tête de désorbeur contient moins de 500 ppm en poids d'amines et de produits de décomposition d'amines.

3. Procédé selon la revendication 1 ou 2, dans lequel le liquide de lavage comprend un condensat de tête d'absorbeur, un condensat de tête de désorbeur et/ou de l'eau fraîche.

4. Procédé selon l'une quelconque des revendications précédentes, dans lequel le liquide de lavage chargé avec l'amine est conduit dans la zone d'absorption.

5. Procédé selon l'une quelconque des revendications précédentes, dans lequel le courant fluide désacidifié et désaminé est refroidi dans un refroidisseur indirect.

6. Procédé selon l'une quelconque des revendications précédentes, dans lequel le courant fluide désacidifié et désaminé est refroidi à une température qui est inférieure à la température du courant fluide contenant de l'eau.

7. Procédé selon l'une quelconque des revendications précédentes, dans lequel le garnissage structuré ou le garnissage irrégulier présente une hauteur d'au moins 1,5 mètre.

8. Procédé selon l'une quelconque des revendications 1 à 6, dans lequel le nombre de plateaux est d'au moins 4.

9. Procédé selon l'une quelconque des revendications précédentes, dans lequel l'agent d'absorption chargé est régénéré dans la zone de désorption par au moins une mesure choisie parmi la détente, l'extraction avec un gaz inerte et le chauffage.

10. Procédé selon la revendication 9, dans lequel l'agent d'absorption chargé avec des gaz acides est préchauffé avant l'entrée dans la zone de désorption par échange de chaleur indirect avec l'agent d'absorption régénéré.

11. Procédé selon l'une quelconque des revendications précédentes, dans lequel l'agent d'absorption chargé est détendu dans un contenant de détente, une phase gazeuse et un agent d'absorption détendu étant obtenus, et l'agent d'absorption détendu étant conduit dans la zone de désorption.

12. Procédé selon la revendication 11, dans lequel au moins une partie du condensat de tête d'absorbeur est introduit dans le contenant de détente.

13. Procédé selon l'une quelconque des revendications précédentes, dans lequel le courant fluide contenant de l'eau présente une teneur en eau qui est d'au moins 20 % de la concentration à saturation en eau.

14. Procédé selon l'une quelconque des revendications précédentes, dans lequel le courant fluide contenant de l'eau est introduit dans la zone d'absorption à une pression de 50 à 70 bar.

15. Procédé selon l'une quelconque des revendications précédentes, dans lequel le courant fluide contenant de l'eau présente une pression partielle de gaz acides de moins de 2,5 bar.

16. Procédé selon l'une quelconque des revendications précédentes, dans lequel le courant fluide contenant de l'eau est choisi parmi :
a) le gaz naturel,
b) un gaz de synthèse,
c) des gaz d'échappement de divers procédés de raffinerie,
d) des gaz de combustion
ou
e) un gaz obtenu par un procédé Claus.
